## Europäisches Patentamt

(19) **European Patent Office**

**Office européen des brevets**

(11) Veröffentlichungsnummer: **0 246 178**

**A2**

(12) **EUROPÄISCHE PATENTANMELDUNG**

(21) Anmeldenummer: 87710006.5

(22) Anmeldetag: 14.05.87

(51) Int. Cl.³: **F 16 N 13/06**
**F 16 N 27/00**

(30) Priorität: 14.05.86 DE 3616183

(43) Veröffentlichungstag der Anmeldung:
19.11.87 Patentblatt 87/47

(84) Benannte Vertragsstaaten:
AT BE FR GB IT NL

(71) Anmelder: J. Lorch Ges. & Co. KG
Bahnhofstrasse 22
D-7035 Waldenbuch(DE)

(72) Erfinder: Diehm, Roland
Hoefingerstrasse 6
D-7257 Ditzingen 1(DE)

(72) Erfinder: Lennartz, Arthur
Rheinstrasse 15
D-7531 Neuhausen(DE)

(72) Erfinder: Beez, Helmut
Lindenweg 17
D-7456 Rangendingen(DE)

(74) Vertreter: Dreiss, Hosenthien & Fuhlendorf
Gerokstrasse 6
D-7000 Stuttgart 1(DE)

(54) Vorrichtung zum dosierten fördern einer flüssigkeit insbesondere von öl.

(57) Bei einer Vorrichtung zum dosierten Fördern einer Flüssigkeit, insbesondere von Öl mit einem in einem Gehäuse (10, 10', 13) geführten, gegenüber dem Gehäuse (10, 10', 13) verstellbaren Ventilspindel (12), deren Ventilkörper (16) mit einem Ventilsitz (15) zusammenwirkt und durch seine axiale Lage gegenüber dem Ventilkörper (16) den Durchfluß von einem Zuführkanal (2) zu einem Abführkanal (5) beeinflußt, wird zum Erreichen einer möglixhst konstanten Flüßigkeitsdosierung mit geringem Aufwand vorgeschlagen, daß die Ventilspindel (12) mit ihrem Ventilkörper (16) über einen Elektromagneten (11), einen Elektromotor hydraulisch oder pneumatisch oder axial zwischen einer Schließstellung und einer Öffnungsstellung bewegbar ist, und daß zur Erzielung einer dosierten Förderung der Flüssigkeit die axiale Bewegungsgeschwindigkeit der Ventilspindel (12) mit dem Ventilkörper (16) einen gewissen Mindestbetrag überschreitet, der bei Flüssigkeiten geringer Viskosität größer ist als bei Flüssigkeiten mit größerer Viskosität.

Figur 1

Bereich II

Beschreibung

Die Erfindung betrifft eine Vorrichtung zum dosierten Fördern einer Flüssigkeit, insbesondere von Öl, mit einer in einer Bohrung eines Gehäuses geführten, gegenüber dem Gehäuse verstellbaren Ventilspindel, deren Ventilkörper mit einem Ventilsitz am Gehäuse zusammenwirkt und die durch ihre axiale Lage gegenüber dem Ventilsitz den Durchfluß von einem Zuführkanal zu einem Abführkanal beeinflußt, wobei ein Ringraum zwischen der Ventilspindel und der Gehäusebohrung einen Teil der Länge der zwischen dem Zuführkanal und dem Abführkanal liegenden Strömungswegs der geförderten Flüssigkeit bildet und der Abführkanal von dem Ringraum ausgeht.

Bei einer solchen aus der DE-AS 1 263 414 bekannten Vorrichtung zum Erzeugen eines Schmiermittelnebels durch Druckluft ist der Abstand des Ventilkörpers von seinem Ventilsitz über ein Einstellgewinde veränderbar, bleibt aber während des Betriebs konstant, so daß der Flüssigkeitsdurchsatz von den herrschenden Druck- und Temperatur-verhältnissen stark abhängt. Zur sicheren Vermeidung eines Trockenlaufs wird daher im Betrieb üblicherweise wesentlich zu viel Schmiermittel dem Luftstrom zugeführt mit der Folge unerwünschter Verunreinigungen. Bei Inbetriebnahme der Anlage erfolgt die Schmiermittelförderung mit relativ großer zeitlicher Verzögerung, so daß empfindliche Maschinen gefährdet werden können. Bekannte Vorrichtungen neigen zu-

- 2 -

0246178

mindest in bestimmten Betriebszuständen zu Schwingungen, verbunden mit unerwünschten Schallabstrahlungen.

In Vermeidung der geschilderten Nachteile liegt der vorliegenden Erfindung die Aufgabe zugrunde, eine Vorrichtung der eingangs genannten Art so zu verbessern, daß der Flüssigkeitsdurchsatz möglichst unabhängig von den herrschenden Druck- und Temperaturverhältnissen ist.

Zur Lösung dieser Aufgabe sieht die Erfindung vor, daß die Ventilspindel mit ihrem Ventilkörper zum Fördern über einen Elektromagneten, einen Elektromotor, hydraulisch oder pneumatisch axial zwischen einer Schließstellung und einer Öffnungsstellung bewegbar ist, wobei ein aufgrund der Bewegung eintretender, in seiner Höhe von der Bewegungsgeschwindigkeit abhängender Fördereffekt mittels einer die Bewegungsgeschwindigkeit der Ventilspindel steuernden elektrischen, pneumatischen oder hydraulischen Steuerung einstellbar ist.

Besonders einfach kann die Ventilspindel in axialer Richtung eine Schwingbewegung ausführen, wobei durch diese rhythmische Schwingbewegung ein besonderer Fördereffekt auftritt, ohne daß die zu fördernde Flüssigkeit mit einem besonderen Förderdruck beaufschlagt werden muß. Zur Erreichung eines Fördereffekts muß die Bewegungsgeschwindigkeit der Ventilspindel einen Mindestbetrag überschreiten, der experimentell leicht ermittelt werden kann.

Besonders vorteilhaft kann die Abhebbewegung des Ventilkörpers von seinem Ventilsitz entgegen der Förderrichtung der Flüssigkeit gerichtet sein, wobei dann unterhalb des Ventilkörpers ein Verdrängerraum vorgesehen ist, in den der Ventilkörper beim Abheben von seinem Ventilsitz eintaucht. Durch die Massenträgheit und die Flüssigkeitsreibung erfolgt damit der Fördereffekt der Flüssigkeit, wobei durch die Wahl der Abmessungen das zeitliche Fördervolumen stark beeinflußbar ist. Insbesondere können sehr kleine Förderströme sehr exakt über lange Zeit geregelt werden, bspw. die Förderung eines Tropfens Öl pro Stunde.

Zur Erzielung auch größerer Förderhöhen kann in besonders vorteilhafter Weise im Zuführkanal zum Verdrängerraum ein Rückschlagventil vorgesehen sein.

Eine optimale Bildung minimaler Förderströme kann dadurch erreicht werden, daß die Ventilspindel einen zylindrischen Schleppraum bildend, im Bereich zwischen dem Ventilsitz und dem mit Abstand oberhalb anschließenden Abführkanal in einer Bohrung angeordnet ist. Dabei kann der den Schleppraum bildende Abstand zwischen Bohrungswand und Ventilspindel kleiner als 0,5 mm sein, wobei der Abstand bei geringer Viskosität der zu fördernden Flüssigkeit kleiner gehalten ist als beim Fördern zäherer Flüssigkeiten.

Um Einflüsse von Luftpolstern zu vermeiden und zur Abdichtung kann zwischen der Ventilspindel und der Bohrungswand oberhalb des anschließenden Abführkanals die Dichtung vorgesehen sein, vorzugsweise ein in der Bohrungswand eingesetzter Dichtungsring mit Kreisquerschnitt oder ein sog. Quadring. Um unnötig hohe Dichtungsdrücke zu vermeiden, ist die Dichtung mit nur geringem Abstand über der Mündung des Abführkanals oder am Bohrungsauslauf vorgesehen und es kann weiter noch der Abführkanal in einer Ringnut in der Bohrungswand münden. Durch die Anordnung der Ringnut wird weiter eine konzentrische Lage der Ventilspindel in der Bohrung gefördert, so daß eine exakte Dosierung über eine lange Zeit verbessert wird.

Zur einfachen Umrüstung auch älterer bestehender Anlagen kann die Ventilspindel, der Ventilsitz und der Elektromagnet bzw. der elektromotorische, hydraulische oder pneumatische Antrieb eine Baueinheit bilden, durch die dann seither verwendete Stelldrosseln ersetzt werden können.

Die Ventilspindel kann vorteilhafterweise auch über eine Handbetätigkeit bewegbar sein, was insbesondere bei der Neuinbetriebnahme von Vorrichtungen und Geräten Vorteile bringt. Dabei kann der Ventilkörper durch eine Feder auf seinem Ventilsitz in Schließlage gehalten sein, so daß bei einer Betriebspause keine Flüssigkeit fließen kann.

Eine besonders einfache und billige Bauweise kann dadurch erreicht werden, daß der Ventilkörper und der Ventilsitz durch den Schleppraum selbst gebildet ist, daß also die Ventilspindel eine durchgehende glatte zylindrische Stange ist und der Schleppraum eine entsprechend durchgehende, glattwandige Bohrung aufweist ggf. mit Ausnahme der Ringnut bei der Einmündung des Abführkanals. Durch die Dichtung allein kann dann schon weitgehend eine zentrische Führung der Ventilspindel in der Bohrung erreicht werden.

Die beschriebene Vorrichtung kann besonders vorteilhaft zur dosierten Ölzuführung in einer Druckluftanlage dienen, vorzugsweise zur Erzeugung eines Ölschmiermittelnebels in der Druckluft, wobei dann das dosiert zu fördernde Öl über eine Ölabtropföffnung dem Luftstrom zugeführt werden kann, wie dies an und für sich bekannt ist. Dabei kann die Ölzuführung im Unterdruckbereich eines Venturirohrs erfolgen, um eine möglichst feine Zerstäubung zu erreichen.

Die beschriebene Vorrichtung kann aber auch zur exakten Feindosierung kleiner Flüssigkeitsmengen in der chemischen Industrie, der Verfahrenstechnik allgemein, aber auch bspw. in der Medizin dienen zur exakten Dosierung von Flüssigkeiten.

Weitere erfindungsgemäße Ausbildungen sind den Unteransprüchen zu entnehmen und werden mit ihren Vorteilen in der nachfolgenden Beschreibung näher erläutert. In den beigefügten Zeichnungen zeigt:

Figur 1　　　eine schematisierte Teilansicht eines Ölverneblers,

Figur 2　　　eine Teilansicht des Bereichs II der Darstellung der Fig. 1 in größerem Maßstab und

Figur 3　　　eine der Figur 2 entsprechende Ansicht einer allgemeinen Ausführungsform einer Dosierpumpe.

Für die dargestellten Ausführungsbeispiele werden für entsprechende Teile die gleichen Bezugszeichen verwendet.

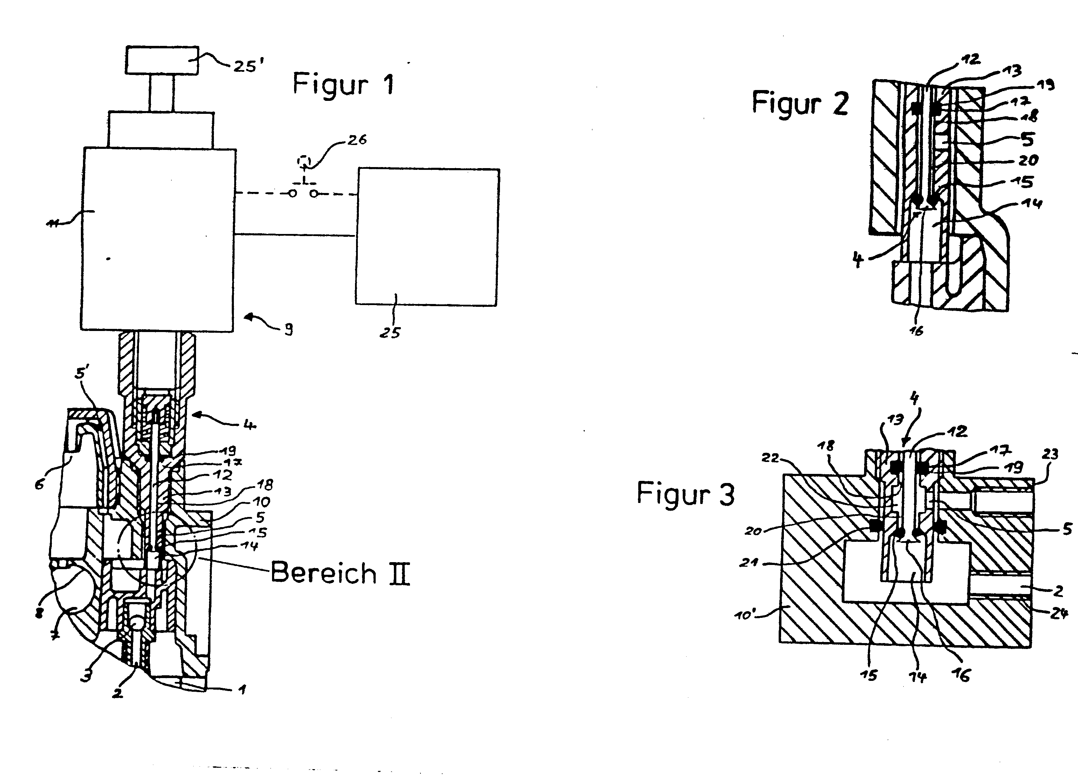

Beim in Fig. 1 dargestellten Ölvernebler wird aus einem Ölvorratsraum 1 über einen Zuführkanal 2, ein Rückschlagventil 3, ein Dosierventil 4, das zugleich als Förderpumpe dient, Öl dosiert über einen Abführkanal 5, 5' und eine Ölabtropföffnung 6 dem Luftdurchgangskanal 7 zugeführt. Dabei ist der Luftdurchgangskanal 7 im Bereich der Ölabtropföffnung 6 als Venturirohr 8 ausgebildet, um dort eine möglichst gute Vernebelung des abtropfenden Öls zu erreichen. Das Dosierventil 4 ist als Baueinheit 9 ausgebildet, auf das Ölgehäuse 10 aufgesetzt und weist einen Elektromagneten 11 auf, über den eine Ventilspindel 12 axial bewegbar ist.

Die Ventilspindel 12 selbst ist in einem rohrförmigen Gehäuseteil 13 axial verschiebbar geführt. Der Gehäuseteil 13 ist unten zu einer Verdrängerkammer 14 erweitert, wobei der Übergang einen Ventilsitz 15 für einen am unteren Ende der Ventilspindel 12 angeordneten Ventilkörper 16 abgibt. Seitlich wird der Gehäuseteil 13 durch den Abführkanal 5 durchbrochen. Oberhalb der Einmündung des Abführkanals 5 ist zwischen der Ventilspindel 12 und dem Gehäuseteil 13 in einer Ringnut 17 der Bohrungswand 18 eine Dichtung 19 in Form eines Rundschnurdichtringes angeordnet.

Die Ventilspindel 12 ist in nicht näher dargestellter Weise mit dem Elektromagneten 11 direkt gekoppelt, so daß durch eine Magnetbewegung eine axiale Verschiebung der Ventilspindel 12 und damit ein Abheben des Ventilkörpers 16 vom Ventilsitz 15 erfolgt. Durch das Eindringen des unteren Endes der Ventilspindel 12 in den Verdrängerraum 14 erfolgt eine teilweise Verdrängung der im Verdrängerraum 14 befindlichen Flüssigkeit, im Ausführungsbeispiel Öl. Durch das Rückschlagventil 3 kann dieses Öl nicht nach unten entweichen, sondern muß nach oben durch den Schleppraum 20 hindurch zum Abführkanal 5 ausweichen. Beim Anheben der Ventilspindel 12 wird insbesondere bei Flüssigkeiten höherer Viskosität ein Flüssigkeitsfilm mit nach oben geführt. Durch die Dichtung 17 wird eine weitere Mitnahme verhindert, so daß auch dieses mitgeschleppte Öl zwangsweise zum Abführkanal 5 weitergeführt wird. Bei der Aufwärtsbewegung der Ventilspindel 12 kann sich der Verdrängerraum 14 über den Zuführkanal 2 wieder mit Öl auffüllen, wobei das leichtgängige Rückschlagventil 3 hier kaum eine Drosselung bewirkt. Es erfolgt aber auch eine Flüssigkeitsförderung, wenn überhaupt kein Rückschlagventil 3 vorgesehen ist, wie dies im Ausführungsbeispiel der Fig. 3 gezeigt ist. Hier ist die Baueinheit 9 im Gehäuse 10' von oben her eingeschraubt, wobei durch eine Dichtung 21 im Gehäuse 10' die Baueinheit 9 nach außen gegenüber dem Gehäuse 10' abgedichtet ist. Bei Einmündung des Abführkanals 5 in den Schleppraum 20 ist im Gehäuseteil 13 eine Ringnut 22 vorgesehen, um in allen Betriebszuständen bezüglich der Ventilspindel 12 einen rotationssymmetrischen Druckaufbau zu gewährleisten. Im Gehäuse 10' sind Gewindeanschlüsse 23, 24 für den Zuführkanal 2 und den Abführkanal 5 vorgesehen, so daß die Baueinheit 9 mit dem Gehäuse 10' beliebig in eine Leitung zur Förderung einer Flüssigkeit eingesetzt werden können. Zweckmäßigerweise kann im Zuführkanal 2 oder im Gehäuse 10' weiter noch ein Rückschlagventil 3 eingebaut sein. Herrscht in der Förderleitung aber kein oder nur ein geringer Druckunterschied, so ist dies zur Erzielung einer Flüssigkeitsförderung nicht erforderlich.

Zur Dosierung und Aufrechterhaltung der Flüssigkeitsförderung wird der Elektromagnet 11 über eine elektronische Steuerung 25, die einen Impulsgenerator aufweisen kann angesteuert. Je nach dem erwünschten Förderstrom kann die Ansteuerung von einzelnen im zeitlichen Abstand erfolgenden Stromimpulsen erfolgen. Werden größere Fördermengen erwünscht oder ist die zu fördernde Flüssigkeit besonders dünnflüssig, so kann auch der Elektromagnet 11 rhythmisch erregt werden, so daß die Ventilspindel 12 eine Schwingbewegung ausführt, wobei die Schwingfrequenz und die Amplitude der Ventilspindel 12 durch die elektronische Steuerung 25 vorgegeben werden können, so daß das Fördervolumen in sehr weiten Grenzen exakt über lange Zeit konstant eingestellt werden kann.

Zusätzlich kann die Ventilspindel 12 noch bspw. durch eine Handbetätigung 25' axial bewegt werden. Es kann aber auch der Elektromagnet 11 über einen Tastschalter 26 von Hand je nach Bedarf mit Strom beaufschlagt werden, wie dies in Fig. 1 gestrichelt angedeutet ist.

# DREISS, HOSENTHIEN & FUHLENDORF 0246178

HANS LANGOSCH
Dipl.-Ing (1963-1981)
UWE DREISS
Dr. jur. Dipl.-Ing. M. Sc
HEINZ HOSENTHIEN
Dr.-Ing., Dipl.-Ing
JÖRN FUHLENDORF
Dipl.-Ing

**PATENTANWÄLTE**

Beim Europäischen Patentamt zugelassene Vertreter
European Patent Attorneys

**D-7000 STUTTGART 1**

GEROKSTRASSE 6
TF (07 11) 24 57 34/44
TG IDEAPAT
TX 7-22 347 idea d

P für Besucher

Telefax (07 11) 24 71 64

DREISS, HOSENTHIEN & FUHLENDORF, D-7000 STUTTGART 1

Anmelder:

J. Lorch Ges. & Co. KG

| Amtl. Akt. Z. Off. Ser. No | Ihr Zeichen Your Ref | Unser Zeichen Our Ref. | Datum Date |
|---|---|---|---|
| | | 2603 099 | 14. Mai 1987 H/bö |

Titel: Vorrichtung zum dosierten Fördern einer Flüssigkeit, insbesondere von Öl

## Ansprüche

1. Vorrichtung zum dosierten Fördern einer Flüssigkeit, insbesondere von Öl, mit einer in einer Bohrung eines Gehäuses (10,10',13) geführten, gegenüber dem Gehäuse (10,10',13) verstellbaren Ventilspindel (12), deren Ventilkörper (16) mit einem Ventilsitz (15) am Gehäuse zusammenwirkt und die durch ihre axiale Lage gegenüber dem Ventilsitz (15) den Durchfluß von einem Zuführkanal (2) zu einem Abführkanal (5) beeinflußt, wobei ein Ringraum zwischen der Ventilspindel und der Gehäusebohrung einen Teil der Länge der zwischen dem Zuführkanal und dem Abführkanal liegenden Strömungswegs der geförderten Flüssigkeit bildet und der Abführkanal von dem Ringraum ausgeht, dadurch gekennzeichnet, daß die Ventilspindel (12) mit ihrem Ventilkörper (16) zum
Fördern über einen Elektromagneten (11), einen Elektromotor,
hydraulisch oder pneumatisch axial zwischen einer Schließstellung und einer Öffnungsstellung bewegbar ist, wobei
ein aufgrund der Bewegung eintretender, in seiner Höhe
von der Bewegungsgeschwindigkeit abhängender Fördereffekt
mittels einer die Bewegungsgeschwindigkeit der Ventilspindel
steuernden elektrischen, pneumatischen oder hydraulischen
Steuerung einstellbar ist.

2. Vorrichtung nach Anspruch 1, dadurch gekennzeichnet, daß
die Ventilspindel (12) in ihrer Achsrichtung eine Schwingbewegung ausführt.

3. Vorrichtung nach einem der Ansprüche 1 oder 2, dadurch gekennzeichnet, daß die Abhebbewegung des Ventilkörpers (16)
von seinem Ventilsitz (15) entgegen der Förderrichtung der
Flüssigkeit gerichtet ist und daß der Ventilkörper (16)
beim Abheben von seinem Ventilsitz in einen Verdrängerraum (14) eintaucht.

4. Vorrichtung nach Anspruch 3, dadurch gekennzeichnet, daß
im Zuführkanal (2) zum Verdrängerraum (14) ein Rückschlagventil (3) vorgesehen ist.

5. Vorrichtung nach einem der Ansprüche 1 bis 4, dadurch gekennzeichnet, daß der Abstand zwischen der Wand der Gehäusebohrung (18) und der Ventilspindel (12) kleiner als 0,5 mm ist.

6. Vorrichtung nach einem der Ansprüche 1 bis 5, dadurch gekennzeichnet, daß zwischen der Ventilspindel (12) und der Wand der Gehäusebohrung (18) außerhalb des einen Teil des Strömungsweges bildenden Ringraums eine Dichtung (17) vorgesehen ist.

7. Vorrichtung nach Anspruch 6, dadurch gekennzeichnet, daß die Dichtung ein in der Wand der Gehäusebohrung (18) eingesetzter Dichtungsring mit Kreisquerschnitt oder ein Quadring ist.

8. Vorrichtung nach Anspruch 6 oder 7, dadurch gekennzeichnet, daß die Dichtung (19) mit nur geringem Abstand über der Mündung des Abführkanals (5) in den Ringraum (20) vorgesehen ist.

9. Vorrichtung nach einem der Ansprüche 6 bis 8, dadurch gekennzeichnet, daß der Abführkanal (5) von einer Ringnut (22) in der Gehäusebohrung ausgeht.

10. Vorrichtung nach einem der Ansprüche 1 bis 9, dadurch gekennzeichnet, daß die Ventilspindel (12), der Ventilsitz (15) und der Elektromagent (11) bzw. der elektromotorische, pneumatische oder hydraulische Antrieb eine Baueinheit (9) bilden.

11. Vorrichtung nach einem der Ansprüche 1 bis 10, dadurch gekennzeichnet, daß die Ventilspindel (12) zusätzlich über eine Handbetätigung (25') bewegbar ist.

12. Vorrichtung nach einem der Ansprüche 1 bis 11, dadurch gekennzeichnet, daß der Ventilkörper (16) durch eine Feder oder magnetisch auf seinen Ventilsitz (15) zugespannt ist.

13. Vorrichtung nach einem der Ansprüche 1 bis 12, dadurch gekennzeichnet, daß sie zur dosierten Ölzuführung in einer Druckluftanlage dient.

Figur 2

Figur 3

Figur 1

Bereich II